# EUROPEAN PATENT SPECIFICATION

(11) **EP 1 052 924 B1**
(45) Date of publication and mention of the grant of the patent: **24.03.2010**
(21) Application number: 98952175.2
(22) Date of filing: 08.10.1998
(51) Int. Cl.: A47L 9/16, A47L 9/12, A47L 5/28

(54) **UPRIGHT VACUUM CLEANER WITH CYCLONIC AIRFLOW**
STIELSTAUBSAUGER MIT ZYKLONARTIGER LUFTSTRÖMUNG
ASPIRATEUR VERTICAL A ECOULEMENT D'AIR DU TYPE A CYCLONE

(30) Priority: 09.01.1998 US 4999; 17.03.1998 EP 98104806; 24.07.1998 US 122541
(43) Date of publication of application: 22.11.2000
(73) Proprietor: ROYAL APPLIANCE MANUFACTURING CO., Cleveland, OH 44143 (US)
(72) Inventor: WRIGHT, Michael, F., Stow, OH 44224 (US); THUR, Charles, J., Mentor, OH 44060 (US); LATIMER, Brett, Mentor, OH 44060 (US); STEPHENS, Paul, D., Cleveland Heights, OH 44125 (US); CIPOLLA, Mark, E., Chardon, OH 44024 (US)
(74) Representative: Kador & Partner
(86) International application number: PCT/US1998/021265
(87) International publication number: WO 1999/034722

(56) References cited:
- GB-A- 2 280 388
- US-A- 3 320 727
- US-A- 4 172 710
- US-A- 4 593 429
- US-A- 5 090 976
- US-A- 5 145 499
- US-A- 5 230 722
- US-A- 5 267 371
- US-A- 5 267 371
- US-A- 5 779 745

## Description

### Background of the Invention

The present invention relates to vacuum cleaners. More particularly, the present invention relates to upright vacuum cleaners used for suctioning dirt and debris from carpets and floors.

Upright vacuum cleaners are ubiquitous. They are known to include an upper portion having a handle, by which an operator of the vacuum cleaner may grasp and maneuver the cleaner, and a lower cleaning nozzle portion which travels across a floor, carpet, or other surface being cleaned. The upper portion is often formed as a rigid plastic housing which encloses a dirt and dust collecting filter bag, although the upper portion may simply be an elongated handle with the filter bag, and an external cloth bag, being hung therefrom. The cleaning nozzle is hingedly connected to the upper handle portion such that the upper portion is pivotable between a generally vertical upright storage position and an inclined operative position. The underside of the nozzle includes a suction opening formed therein which is in fluid communication with the filter bag.

A vacuum or suction source such as a motor and fan assembly is enclosed either within the nozzle portion or the upper portion of the cleaner. The vacuum source generates the suction required to pull dirt from the carpet or floor being vacuumed through the suction opening and into the filter bag. A rotating brush assembly is typically provided in proximity with the suction opening to loosen dirt and debris from the surface being vacuumed.

To avoid the need for vacuum filter bags, and the associated expense and inconvenience of replacing the bag, another type of upright vacuum cleaner utilizes cyclonic airflow, rather than a filter bag, to separate a majority of the dirt and other particulates from the suction airstream. The air is then filtered to remove residual particulates, returned to the motor, and exhausted.

Such prior cyclonic airflow upright vacuum cleaners have not been found to be entirely effective and convenient to use. For example, with these prior cyclonic airflow vacuum cleaners, the process of emptying dust and dirt from the cyclonic chamber dirt collection container has been found to be inconvenient, and often resulted in the spillage of the cup contents. Likewise, with these prior units, replacement of the filter element has not been convenient. Other cyclonic airflow vacuum cleaners have been found to exhaust air which is not free of residual contaminants. For example, one prior unit filters the airstream after it passes through the cyclonic chamber, but thereafter passes the airstream through the motor assembly where it is potentially recontaminated by the motor assembly, itself, prior to its being exhausted into the atmosphere.

Because the cyclonic action of such vacuum cleaners does not completely remove all dust, dirt, and other contaminants from the suction airstream, it is necessary to include a filter downstream from the cyclonic chamber. As such, prior cyclonic airflow vacuum cleaners have heretofore included conventional filter elements including conventional media to filter the airstream after it passes through the cyclonic chamber. These prior filter elements have caused considerable difficulties. A conventional filter that is sufficiently fine to filter the airstream effectively unduly restricts airflow and decreases the effectiveness of the cyclonic action. On the other hand, a coarse filter does not effectively filter the airstream of residual contaminants. Further, conventional filter media, such as paper or fibrous media, has been found to clog readily, thereby unduly decreasing airflow rates over time. Thus, a need has been found for a cyclonic airflow vacuum cleaner with an effective filter positioned downstream relative to the cyclonic chamber for effectively filtering the airstream without clogging.

US 4,172,710 discloses an upright vacuum cleaner according to the preamble of claim 1.

Accordingly, it has been deemed desirable to develop a new and improved upright vacuum cleaner which would overcome the foregoing difficulties and others while providing better and more advantageous overall results.

### Summary of the Invention

In accordance with the invention, an upright vacuum cleaner is provided.

The vacuum cleaner includes an upright housing section including a handle. A nozzle base section is hingedly interconnected with the upright housing section and includes a main suction opening formed in an underside thereof. A cyclonic airflow chamber is defined in the upright housing section and separates dust and dirt from a suction airstream. A suction source is located in one of the upright section and the nozzle base section and has a suction airflow inlet in fluid communication with the cyclonic chamber and a suction airflow outlet. A main filter element is located in the cyclonic chamber upstream from the suction source for filtering residual dust and dirt from a suction airstream passing through the cyclonic airflow chamber. The main filter element extends upwardly within the cyclonic airflow chamber from a floor of said housing section. The lower portion of the cyclonic airflow chamber is defined by a dirt container for receiving and retaining dirt and dust separated from the suction airstream.

One advantage of the present invention is the provision of a new and improved vacuum cleaner.

Another advantage of the invention is found in the provision of a vacuum cleaner with a cyclonic airflow chamber through which the suction airstream flows for separating dust and dirt from the airstream and for depositing the separated dust and dirt into an easily and conveniently emptied dirt cup.

Still another advantage of the present invention resides in the provision of a cyclonic airflow upright vacuum cleaner with a main filter that effectively filters residual contaminants from the suction airstream between the cyclonic airflow chamber and the motor assembly without unduly restricting airflow and without premature clogging.

Yet another advantage of the invention is the provision of a cyclonic airflow upright vacuum cleaner with a final filter located downstream from the suction motor assembly for filtering the suction airstream immediately prior to its exhaustion into the atmosphere.

A further advantage of the invention is the provision of a vacuum cleaner with a main filter, an auxiliary filter, and a final filter wherein the main, auxiliary, final filters are easily removable and replaceable.

A still further advantage of the present invention is the provision of a vacuum cleaner with a filter element mounted in a filter housing wherein the filter element and filter housing cooperate to provide a tortuous flow path for air flowing therethrough.

A yet further advantage of the present invention is the provision of a vacuum cleaner with a cyclonic airflow chamber wherein accumulated dust and dirt in the chamber act to further filter at least a portion of the suction airstream passing through the chamber.

An additional advantage of the present invention is the provision of a vacuum cleaner with a cyclonic airflow chamber and main filter element, wherein the main filter element is positioned in a removable dirt cup partially defining the cyclonic airflow chamber for ease of emptying the dirt cup and cleaning the filter.

Still other benefits and advantages of the invention will become apparent to those skilled in the art upon reading and understanding the following detailed description.

### Brief Description of the Drawings

The invention may take form in certain components and structures, preferred embodiments of which will be illustrated in the accompanying drawings wherein:
FIGURE 1 is a perspective view illustrating a cyclonic airflow upright vacuum cleaner;
FIGURE 2 is a front elevational view of the vacuum cleaner illustrated in FIGURE 1;
FIGURES 3 and 4 are left and right side elevational views, respectively, of the vacuum cleaner shown in FIGURE 1;
FIGURE 5 is a rear elevational view of the vacuum cleaner of FIGURE 1, further showing the required suction hose-assemblies in broken lines for clarity;
FIGURE 6 is a bottom plan view of the vacuum cleaner of FIGURE 1;
FIGURE 7 is a front elevational view of the upright body portion of the vacuum cleaner of FIGURE 1;
FIGURE 8 is a partial side view in cross-section of the vacuum cleaner illustrated in FIGURE 1, and further diagrammatically illustrating the suction airstream flow;
FIGURE 9 is a perspective view of the upright body portion shown in FIGURE 7, with the dirt cup and main filter housing removed for clarity;
FIGURE 10 is an exploded perspective view of the main filter, main filter housing, and dirt cup;
FIGURE 11 is a perspective view of the final filter assembly in accordance with the present invention;
FIGURES 12A and 12B are rear elevational and bottom plan views, respectively, of the upper portion of the main filter housing;
FIGURE 13A is a perspective view of a main filter in accordance with the present invention;
FIGURE 13B is a bottom plan view of the main filter;
FIGURE 13C is a cross-sectional view of the main filter along line C-C of FIGURE 13B;
FIGURE 13D is a cross-sectional view of an alternative main filter element;
FIGURE 14 is a front elevational view, partially in cross-section along line E-E of FIGURE 8, illustrating the upright body portion of the vacuum cleaner of FIGURE 1;
FIGURE 15 is a side elevational view in cross-section of a vacuum cleaner with cyclonic airflow in accordance with the present invention showing airflow through the cyclonic airflow dust and dirt separating chamber;
FIGURE 16 is an exploded perspective view of an upper housing member and associated upper conduit of the vacuum cleaner of FIGURE 15;
FIGURE 17 is a cross-sectional view of the upper housing member and conduit of FIGURE 16;
FIGURE 18 is a perspective view of the upper conduit of FIGURE 16;
FIGURE 19 is an exploded perspective view of a dirt cup, filter and filter mount means as employed in the vacuum cleaner of FIGURE 15; and,

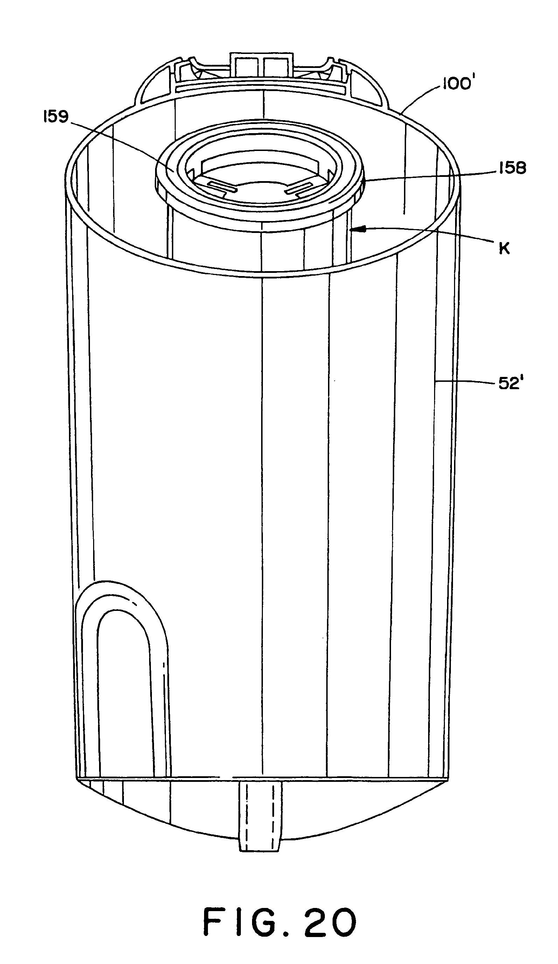

FIGURE 20 is a rear elevational view of the dirt cup, filter and filter mount means of FIGURE 19 in an assembled condition.

### Detailed Description of the Preferred Embodiments

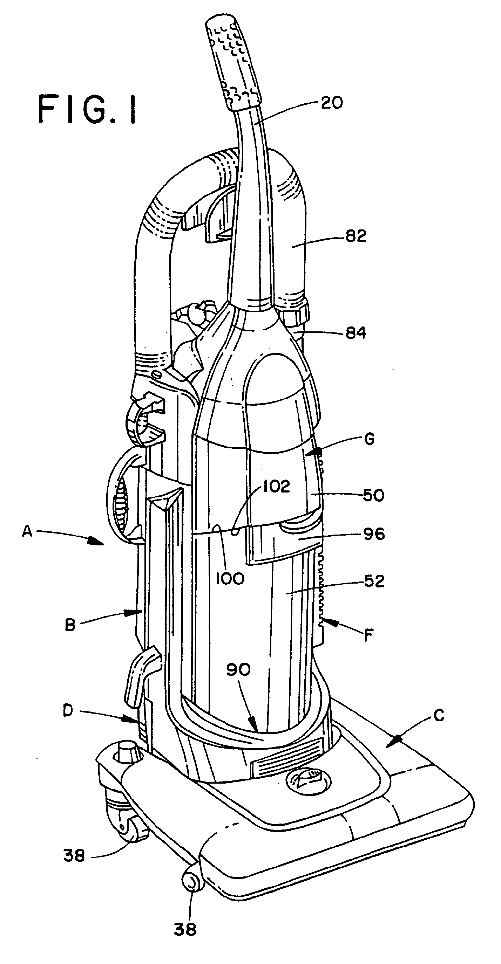

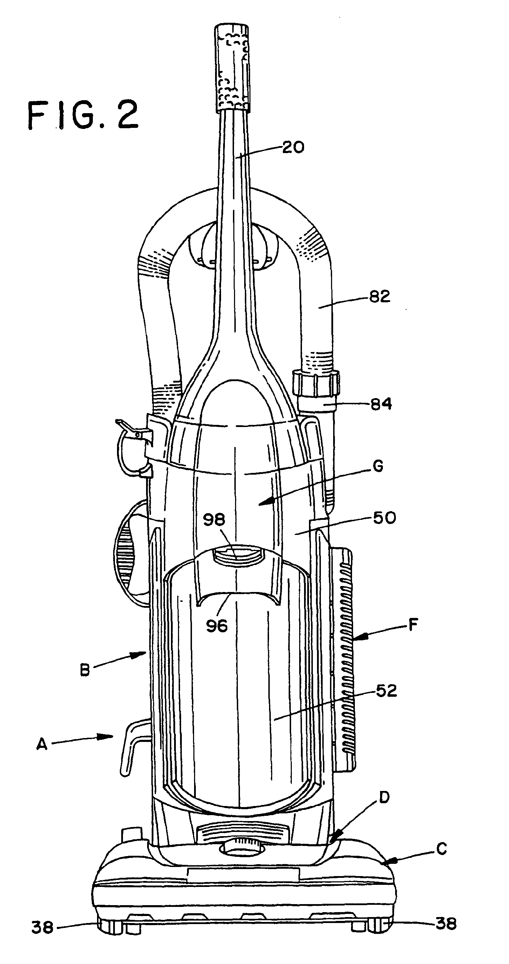

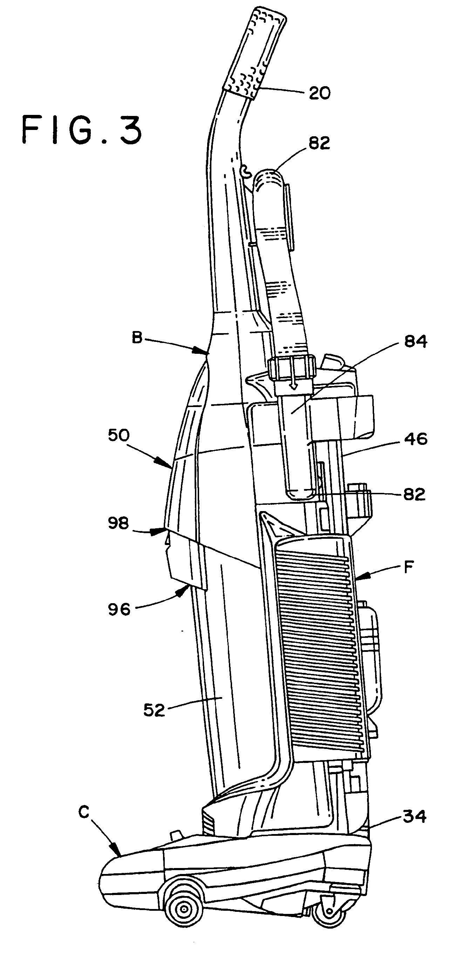

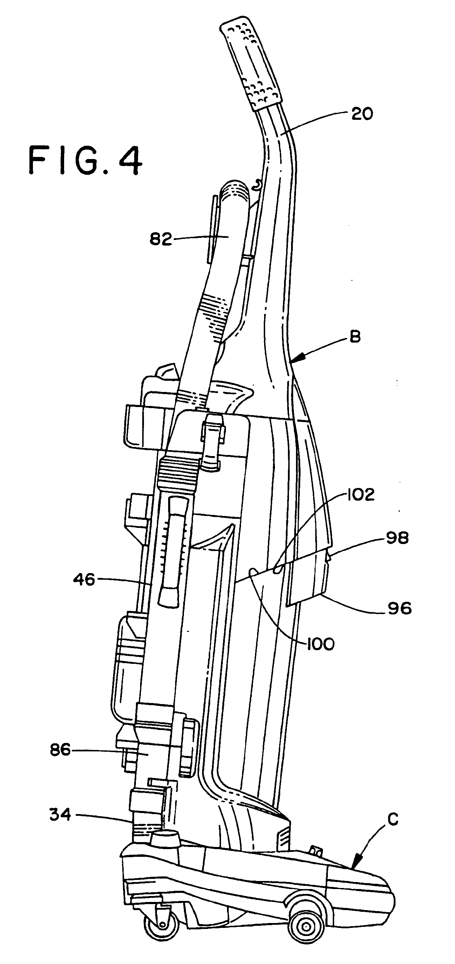

Referring now to the FIGURES, FIGURES 1-6 illustrate an upright vacuum cleaner A including an upright housing section B and a nozzle base section C. The sections B,C are pivotally or hingedly connected through the use of trunnions or another suitable hinge assembly D so that the upright housing section B pivots between a generally vertical storage position (as shown) and an inclined operative position. Both the upright and nozzle sections B,C are preferably made from conventional materials such as molded plastics and the like. The upright section **B** includes a handle **20** extending upward therefrom by which an operator of the vacuum **A** is able to grasp and maneuver the vacuum.

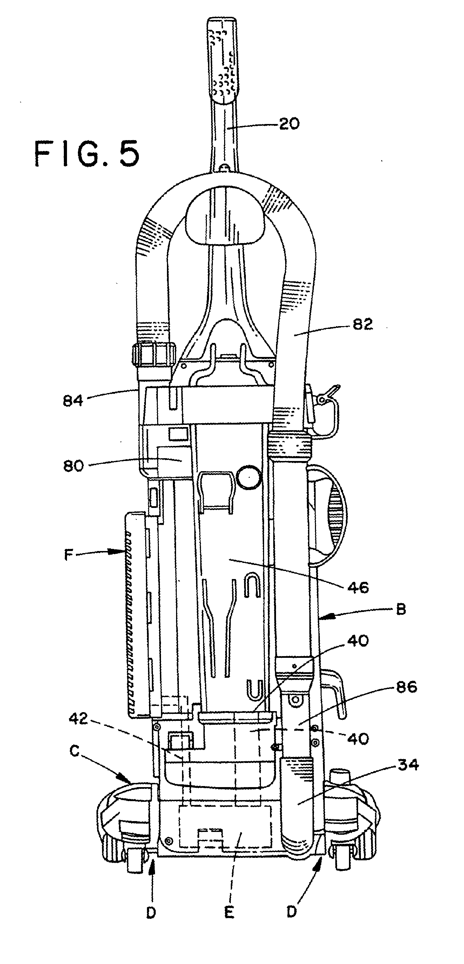

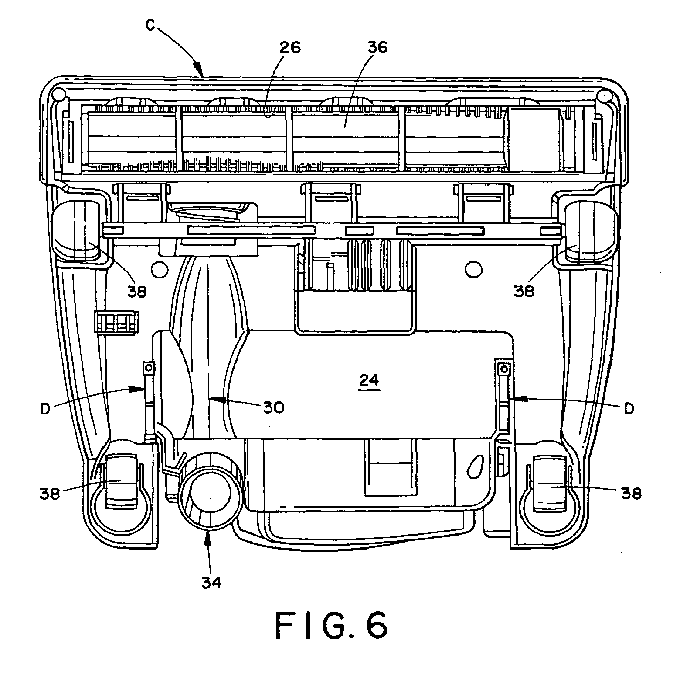

During vacuuming operations, the nozzle base C travels across the floor, carpet, or other subjacent surface being cleaned. The underside **24** (FIGURE 6) of the nozzle includes a main suction opening **26** formed therein which extends substantially across the width of the nozzle at the front end thereof. The main suction opening **26** is in fluid communication with the vacuum upright body section **B** through a passage **30** and a connector hose assembly **34** (FIGURE 5). A rotating brush assembly **36** is positioned in the region of the nozzle main suction opening **26** for contacting and scrubbing the surface being vacuumed to loosen embedded dirt and dust. A plurality of wheels **38** support the nozzle on the surface being cleaned and facilitate its movement thereacross.

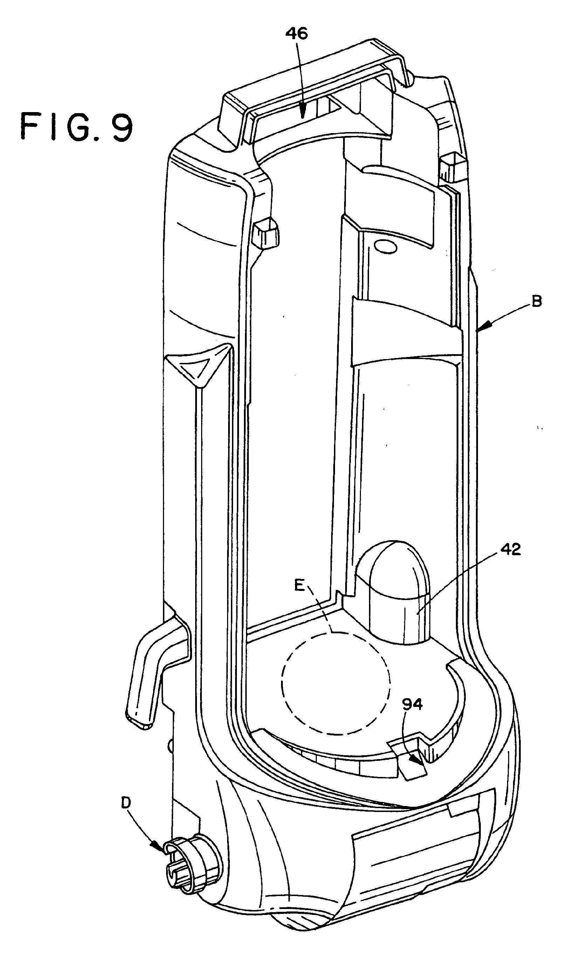

The upright vacuum cleaner **A** includes a vacuum or suction source for generating the required suction airflow for cleaning operations. With reference particularly to FIGURES 5 and 9, a suitable suction source, such as an electric motor and fan assembly **E,** generates a suction force in a suction inlet **40** and an exhaust force in an exhaust outlet **42.** The motor assembly airflow exhaust outlet **42** is in fluid communication with a downstream final filter assembly **F** for filtering the exhaust airstream of any contaminants immediately prior to its discharge into the atmosphere. The motor assembly suction inlet **40,** on the other hand, is in fluid communication with an upstream elongated suction conduit **46** which extends upward from the motor/fan assembly **E** to an upper region of the upright section **B** where it communicates with the cyclonic suction airflow dust and dirt separating region **G** of the vacuum **A** to generate a suction force therein.

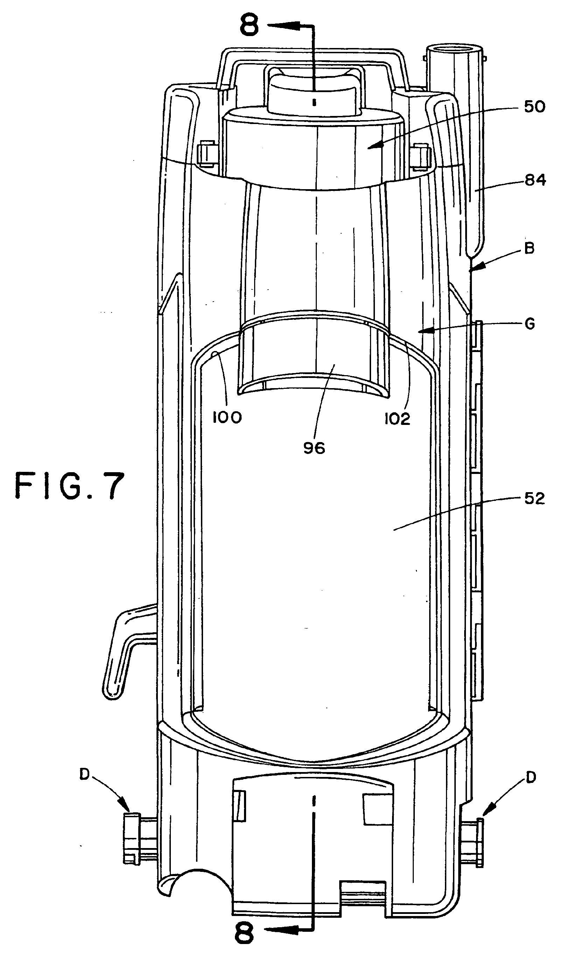

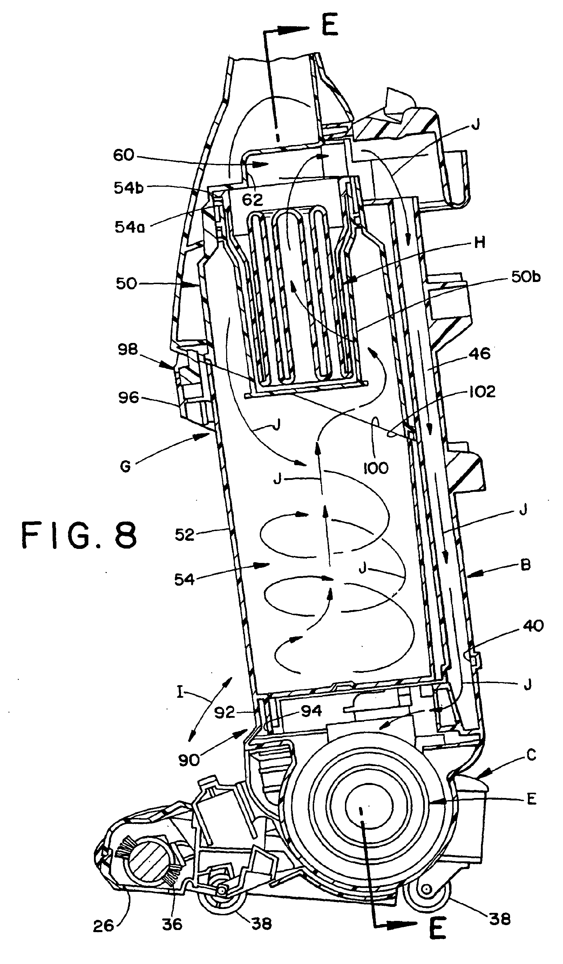

With reference particularly to FIGURES 7 and 8, the cyclonic suction airflow dust and dirt separating region **G** housed in the upright section **B** includes a main filter housing assembly 50 and a mating dust and dirt cup or container **52.** The sections **50,52** together define a generally cylindrical cyclonic airflow chamber **54.**

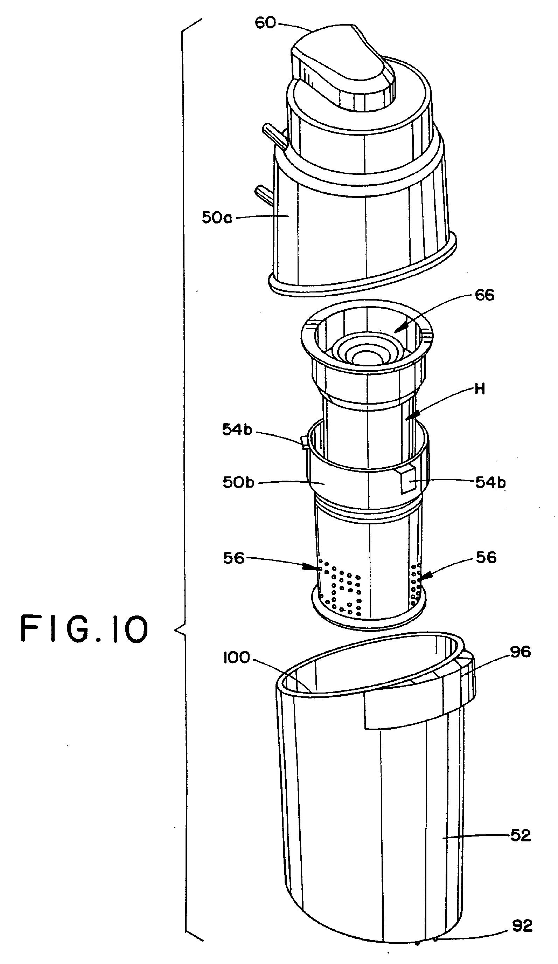

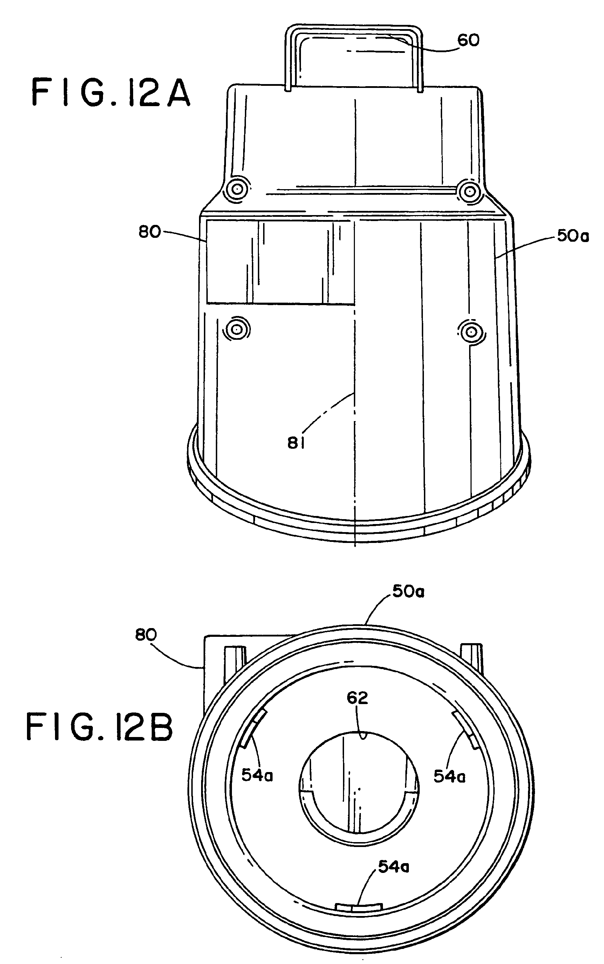

It may be seen with reference also to FIGURE 10 that the main filter housing assembly **50** is, itself, constructed from two mating sections - an upper fixed housing section **50a,** and a lower, detachable filter housing section **50b.** The lower detachable filter housing section **50b** receives and retains a main filter element or cartridge **H.** The filter housing section 50b releasably connects with the upper housing section **50a** to secure the filter element **H** in an operative filtering position. More particularly, the section **50b** includes a plurality of tabs or tangs **54b** extending therefrom. Likewise, with reference also to FIGURE 12B, it is shown that the upper housing section **50a** includes mating tabs or tangs **54a.** Thus, those skilled in the art will recognize that the components **50a,50b** connect in a key-like fashion upon rotation of the filter housing section **50b** in relation to the upper housing section **50a** so that a filter element **H** is operatively secured in position. Of course, rather than the mating tabs **54a,54b,** the two housing sections **50a,50b** may alternatively include mating threads, clips, or other suitable cooperating fastening means. The filter housing section **50b** includes a plurality of apertures, slots, or other passages **56** formed therethrough, preferably in the lower half thereof, so that the suction airstream flows freely from the chamber **54** into the filter housing section **50b** and to the main filter element **H.**

The housing upper section **50a** includes a suction airflow outlet passage **60** (FIGURE 8) which communicates with the cyclonic chamber **54** through an aperture **62.** The outlet passage **60** also communicates with the elongated suction conduit **46** leading to the motor/fan assembly **E** when the main filter housing assembly **50** is operatively connected to the vacuum upright section **B.** FIGURES 8 and 9 show that the elongated suction conduit **46** extends from the motor/fan assembly **E** upward to communicate with the main filter housing suction outlet passage **60** so that the suction inlet of the motor/fan assembly **E** is able to fluidically communicate with the cyclonic chamber **54.** When the main filter housing assembly **50** is assembled and in the operative position as described, a mouth **66** (FIGURE 10) of the filter element **H** mates with the periphery of the aperture **62** in a fluid-tight relationship. As such, the suction airflow from the cyclonic chamber **54** to the motor/fan assembly suction inlet **42** is not able to bypass the main filter element **H,** but instead must pass therethrough and be filtered of residual contaminants. It is preferable that the aperture **62,** and thus the main filter element **H** be centrally located in the cyclonic chamber **54** to facilitate the cyclonic airflow in the chamber.

The suction airstream enters an upper portion of the cyclonic dust and dirt separation chamber **54** through a generally tangential suction airstream inlet **80.** In the preferred embodiment, as shown in FIGURES 12A-12B, the cyclonic chamber airstream inlet **80** is formed in the upper section **50a** of the main filter housing assembly **50.** It is noted that the inlet **80** is disposed entirely on one side of a center line **81** of the upper housing section so as to induce a swirling flow around the filter housing section **50b.** The suction airstream inlet **80** of the chamber **54** is in fluid communication with a suction airstream hose **82** through a fitting **84.** As shown in FIGURE 5, the hoses **82,34** are fluidically connected via fitting **86.** As such, the main suction opening **26** formed in the nozzle underside **24** is in fluid communication with the cyclonic chamber **54** through the passage **30,** the hoses **34,82,** and the cyclonic chamber suction inlet **80.**

The dirt cup or container **52** of the cyclonic airflow dust and dirt separating assembly **G** is constructed for large capacity and ease of emptying the contents as necessary. In FIGURE 8, it may be seen that the dirt container **52** defines over ½ the volume of the cyclonic chamber **54.** As such, the capacity of the container **52** is maximized to lengthen the operational time before the dirt container **52** must be emptied. Furthermore, the dirt container **52** is preferably at least partially transparent so that an operator of the vacuum is able to view the level of dirt and dust accumulated therein for purposes of determining when the dirt container should be emptied.

The dirt container **52** is connected to the vacuum upright section **B** through use of a hinge assembly **90** which allows the dirt container **52** to pivot as indicated by the arrow I between an operative upright position and an open forwardly tilted position. As shown herein, the hinge **90** comprises a first component **92** connected to the dirt container **52** and a second mating component **94** formed on the upright section **B.** Once the dirt container **52** is pivoted to the open position, it may be pulled upward and away from the section **B and** separated therefrom for ease of emptying the dirt container. Of course, after the dirt container is emptied, the foregoing procedure is reversed so that the dirt container is once again in the operative position. A handle **96** is provided on the exterior of the container **52** to facilitate operator movement of the container between the operative, open, and removed position. **A** resiliently biased latch **98** retains the dirt container in the operative position. The latch **98** is biased through use of a spring or other resilient member, or via the natural resiliency of the plastic from which it is molded.

With continuing reference to FIGURE 8, the dirt container upper edge **100** defining an open upper end of the container **52** is preferably inclined downwardly in the direction away from the handle **96** or front of the container **52.** The main filter housing assembly section **50** is formed with a complimentary mating inclined edge **102,** and a seal such as a gasket or other structure (not shown) is provided between the edges **100,102** to prevent air leakage into the cyclonic airflow chamber **54.** The inclined upper edge **100** of the dirt container **52** also ensures that, when the container is pivoted to the open position, the upper edge **100** lies in a substantially horizontal plane. As such, the contents of the container are much less likely to spill when the container is opened during emptying operations. Preferably, the angle at which the upper edge **100** is inclined from horizontal is selected, in combination with the maximum distance the container is able to be pivoted on the arc I when opened, such that when the container is fully opened, the upper edge lies in a substantially horizontal plane.

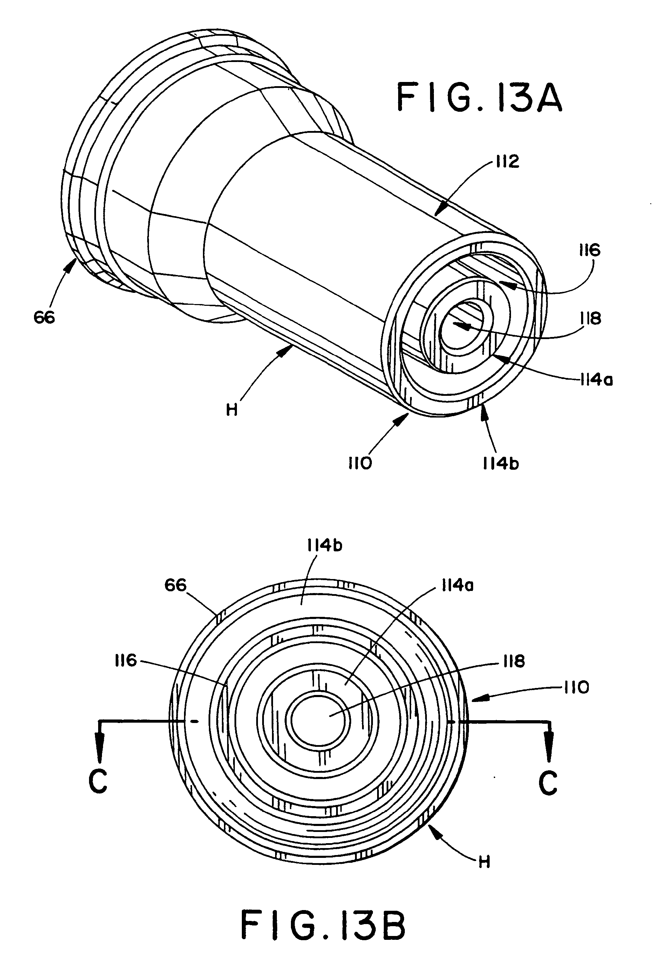

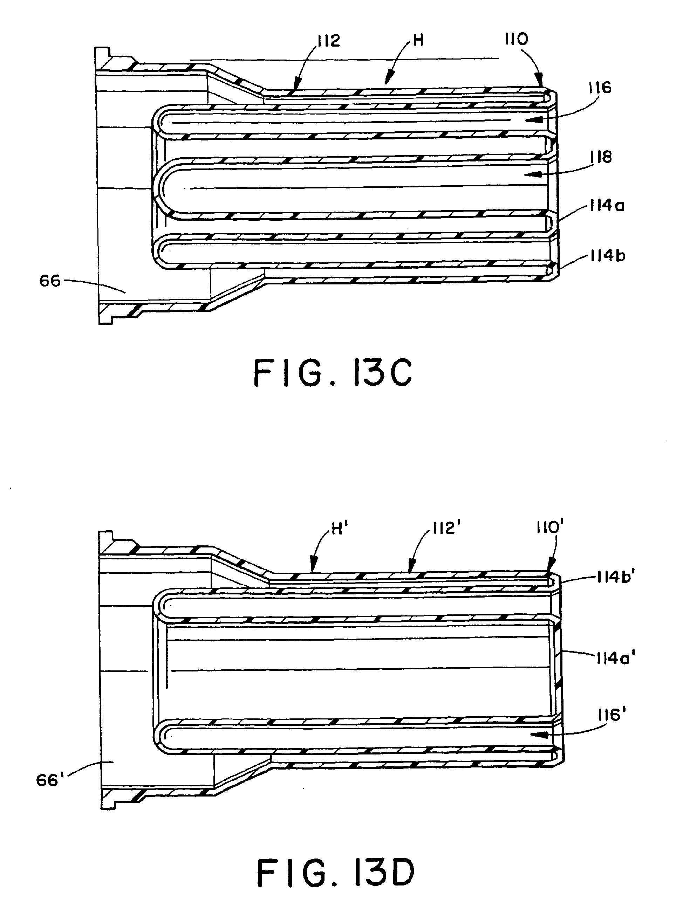

As is shown in FIGURES 13A-13C, the main filter element **H** is preferably generally frusto-conical in overall configuration, converging in the direction away from the filter mouth **66** toward an opposite filter end **110.** However, those skilled in the art will recognize that a cylindrical or other filter configuration may be advantageously employed.

The preferred filter media comprises Porex^{®} brand high density polyethylene-based open-celled porous media available commercially from Porex Technologies Corp., Fairburn, Georgia 30213, or an equivalent foraminous filter media. This preferred filter media is a rigid open-celled foam that is moldable, machinable, and otherwise workable into any shape as deemed advantageous for a particular application. Most preferably, to optimize filtration but also to allow sufficient airflow rates, the preferred filter media has an average pore size in the range of 45µm to 90µm. As is shown in FIGURES 13A-13C, the filter **H** is most preferably formed in a convoluted or circuitous configuration to maximize an outer surface area **112** of the filter. The maximized surface area **112** allows for the filter media to have a smaller pore size without unduly restricting the airflow therethrough. Most preferably, the filter media is formed into at least two elongated and concentric cylinders and/or frustums **114a,114b** with a deep annular passage **116** defined therebetween. Preferably, a deep central passage **118** is defined in the innermost cylinder or frustum **114a.** However, it should be appreciated that other filter designs could also be used if so desired. For example, it is possible to use a filter element not having a deep central passage. FIGURE 13D illustrates such an alternative configuration of the main filter element **H'.** Like components relative to the main filter element **H** are identified with like numerals including a primed (') suffix. The filter element **H'** is formed by concentric cylindrical portions **114a',114b'** separated by a deep annular passage **116'.** However, unlike the main filter element **H,** the element **H'** does not include a deep central passage formed in the inner cylinder **114a'.**

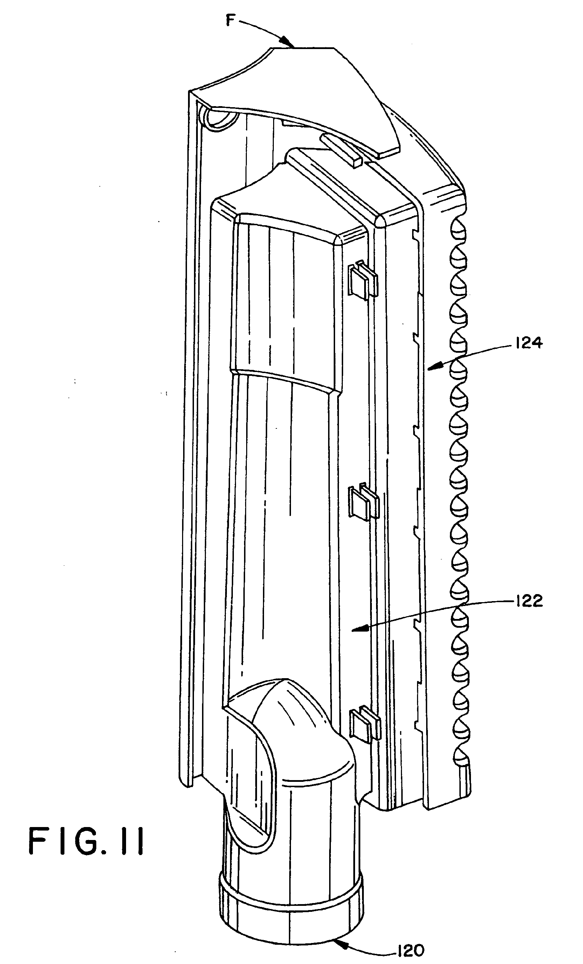

As mentioned, the subject vacuum **A** also comprises a final filter assembly **F** for filtering the suction airstream downstream from the motor/fan assembly and immediately prior to its exhaustion into the atmosphere. The preferred final filter assembly **F** is illustrated most clearly in FIGURE 11 and comprises a suction airstream inlet **120** which is connected downstream and in fluid communication with the exhaust outlet **42** of the motor and fan assembly **E.** The inlet **120** is itself in fluid communication with an elongated plenum **122** that opens to the atmosphere and houses filter media. A protective grid or grate structure is snap-fit or otherwise effectively secured over the plenum 122 to secure the filter media in place. The filter media is preferably a high efficiency particulate arrest (HEPA) filter element in a sheet or block form. The filter media is retained in position in the plenum by the grid **124,** but is easily replaced by removing the grid. As such, those skilled in the art will recognize that even if the motor/fan assembly causes contaminants to be introduced into the suction airstream downstream from the main filter element **H,** the final filter assembly **F** will remove the same such that only contaminant-free air is discharged into the atmosphere.

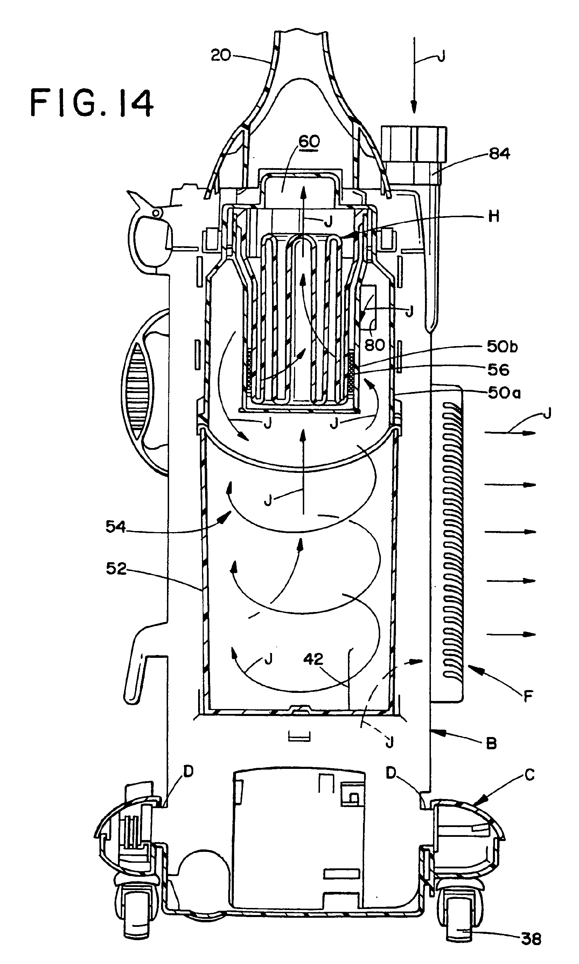

Referring primarily to FIGURES 8 and 14, the operation of the vacuum cleaning apparatus **A** is illustrated, with the flow of the suction airstream indicated by use of arrows **J**. The motor/fan assembly **E** or other suction generator establishes a suction force at its suction inlet **42,** in the elongated suction conduit **46,** and thus in the cyclonic separation chamber **54.** This suction force or negative pressure in the chamber **54** is communicated to the main suction opening **26** formed in the nozzle underside **24** through the hoses **82,34** (FIGURE 5) and associated fittings. This, then, in combination with the scrubbing action of the rotating brush assembly 36 causes dust and dirt from the surface being cleaned to be entrained in the suction airflow **J** and pulled into the upper portion of the chamber **54** through the generally tangential inlet **80.**

The location of the inlet **80,** the outlet passage **60,** and the generally cylindrical configuration of the chamber **54** causes the suction airstream to follow a swirling or cyclonic path downward within the chamber **54** and then to move upward through a central portion of the chamber **54** toward the centrally located main filter housing section **50b.** The orientation of the inlet **80** will affect the direction of cyclonic airflow, and the invention is not meant to be limited to a particular direction, i.e, clockwise or counterclockwise. Those skilled in the art will certainly recognize that the term "cyclonic" as used herein is not meant to be limited to a particular direction of airflow rotation. This cyclonic action separates a substantial portion of the entrained dust and dirt from the suction airstream and causes the dust and dirt to be deposited in the dirt cup or container **52.** The suction airstream then passes through the apertures **56** formed in the main filter housing section **50b,** passes through the main filter element **H** so that residual contaminants are removed, and exits the cyclonic chamber **54** through the suction airstream outlet passage **60** formed in the main filter housing section **50a.** The suction airstream is communicated to the motor/fan assembly **E** and exhausted through the outlet **42** (as indicated by broken arrows) to the final filter assembly **F** where it is filtered again by the HEPA filter to remove any contaminants that passed through the chamber **54** and the filter **H,** and any contaminants in the airstream due to its passage through the motor/fan assembly **E.**

The main filter element **H** can be cleaned by washing it, either manually or in a dishwasher -- since it is dishwasher-safe -- to remove dust or dirt particles adhering to the filter element. It is, however, important that the filter **H** be dried before it is used again. The final filter media of the filter assembly **F,** however, can not be cleaned and must be replaced when it becomes clogged.

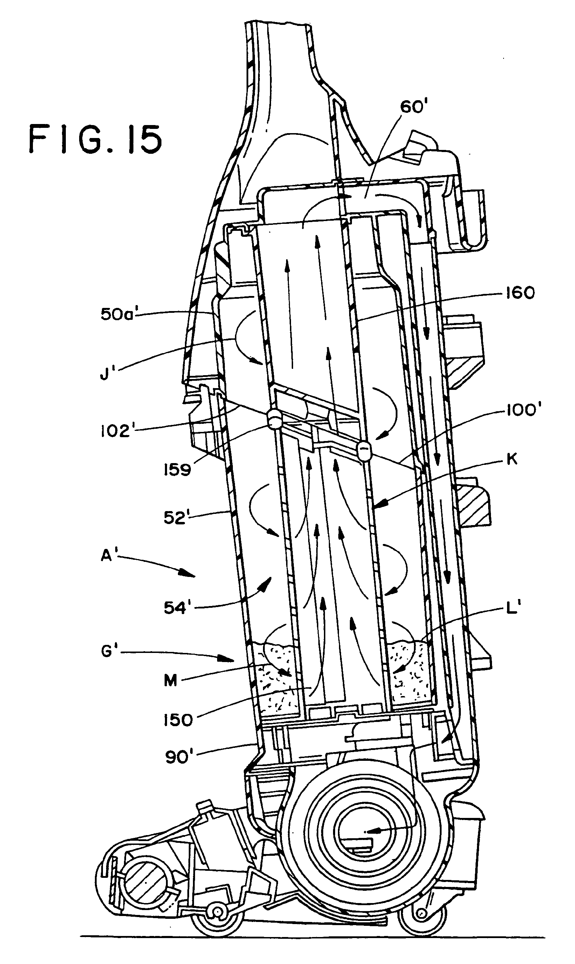

FIGURE 15 illustrates a cyclonic airflow vacuum cleaner **A'** in accordance with the present invention. For ease of understanding the invention, like components relative to the vacuum cleaner **A** are identified with like reference numbers and letters including a primed (') suffix, and new components are identified using new reference numbers and letters. Except as otherwise noted herein, and as is apparent from the drawings, the vacuum cleaner **A'** is identical to the vacuum cleaner **A.**

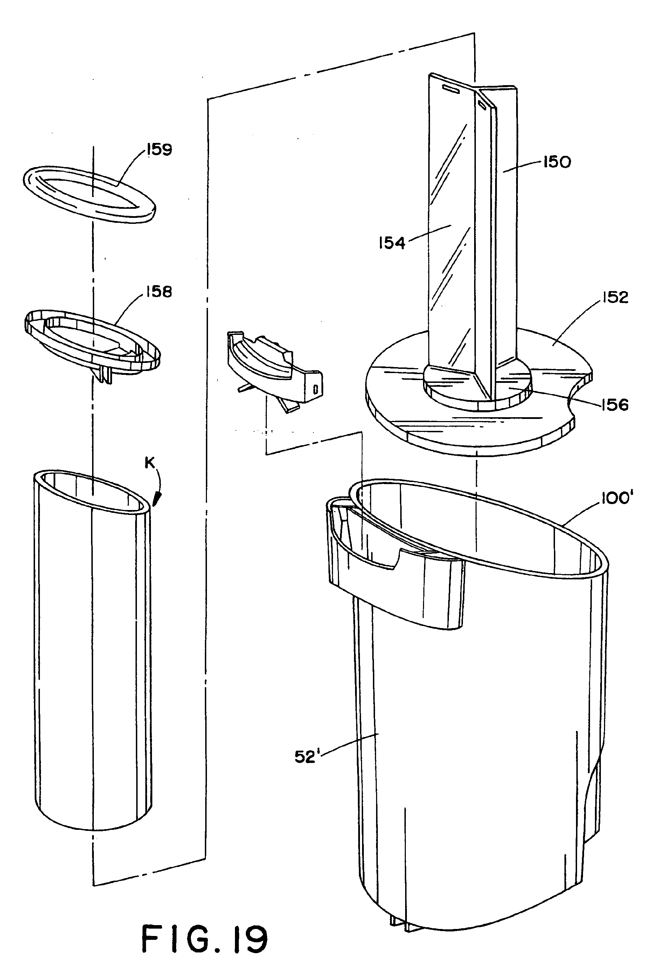

In particular, the vacuum cleaner **A'** includes a modified cyclonic airflow dust and dirt separating region **G'.** As with the vacuum cleaner **A,** the cyclonic airflow region **G'** includes a cyclonic airflow chamber **54'** defined by an upper, fixed housing member **50a'** and a lower dirt cup or container **52'** which is pivotally and releasably connected to the upper housing **B'** of the vacuum cleaner via a hinge assembly **90'.** With reference now to FIGURE 19, the dirt cup **52'** includes a main filter support such as a post, stem, or like structure **150** extending upwardly from a floor or base **152** thereof. The post **150** is positioned in a central region of the cyclonic airflow chamber **54'. A** hollow cylindrical main filter element **K is positioned** over the main filter support **150.**

The filter element **K** is engaged in an interference fit with vanes **154** and a disc-like plateau **156** located on the floor **152** of the filter support so that the filter is releasably, yet securely, retained in its operative position as shown herein, even when the dirt cup **52'** is removed from the vacuum cleaner and inverted for purposes of emptying the contents thereof. **A** filter locking means **158,** accommodating a gasket 159, is provided along the uppermost edge of the main filter element **K.** The main filter element **K** extends upwardly from the dirt cup floor **152** to a level approximately equal to an upper edge **100'** of the dirt cup **52'.** Most preferably, as shown herein, the uppermost edge of the main filter element **K** is also sloped in the same manner as is the dirt cup upper edge **100'.** Over the entire height of the dirt cup **52',** an annular cyclonic airflow passage is defined between the main filter support and the dirt cup **52'.**

It should be apparent from a comparison of FIGURES 19 and 15 that the base **152** serves as the base of the dirt cup **52'.** To this end, the base **152** is suitably secured by conventional means to the side walls forming the dirt cup.

The main filter element **K** preferably comprises the same filter media as the filters **H,H'.** As shown herein, the filter element **K** is purely cylindrical in shape, but those skilled in the art will recognize that the filter element **K** may also be formed with a convoluted or other irregular shape to increase its surface area and efficiency.

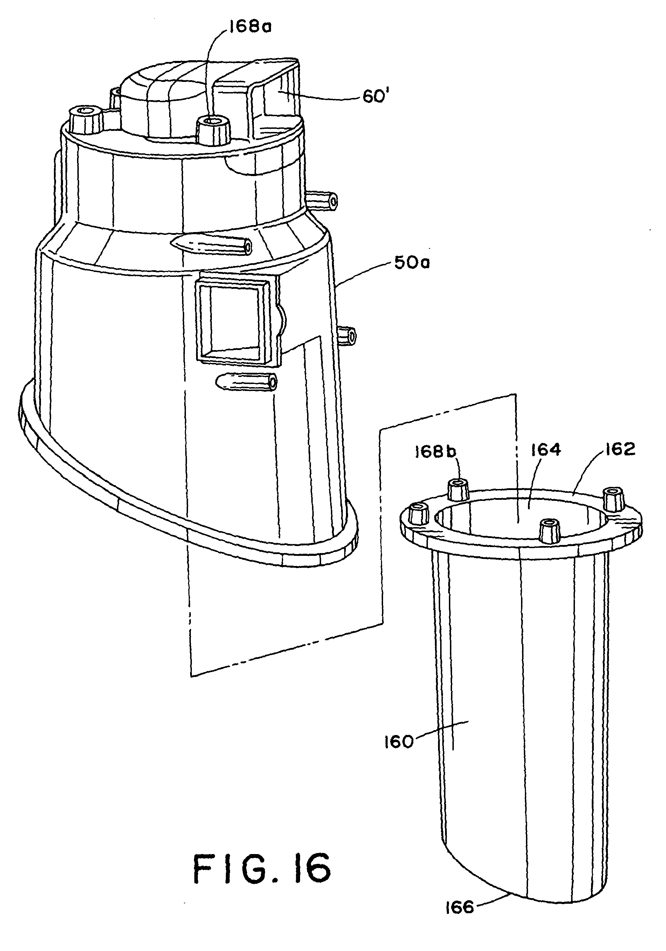

Referring now also to FIGURES 16-18, the upper housing member **50a'** includes an upper conduit **160** depending centrally from a top wall **162.** The upper conduit **160** is preferably a hollow cylindrical member with a passage **164** extending therethrough. The passage **164** is in fluid communication with the suction airstream outlet passage **60'** through which the suction airflow J' exits the cyclonic airflow chamber **54'.** The upper conduit **160** projects downwardly from the top wall **162** so that the lowermost edge **166** thereof is approximately equal to the level of the lower edge **102'** of the conduit member **50a'.** Also, the lower edge **166** is sloped in a manner that corresponds to the slope of the housing member lower edge **102'.** The upper conduit **160** is connected to the upper housing member **50a'** by any suitable means such as fasteners engaged in aligned bores **168a,168b** (FIGURE 16) respectively formed in the housing member **50a'** and conduit **160.** As mentioned, the gasket **159** is provided along the joint between the lowermost edge **166** of the upper conduit **160** and the upper edge of the filter **K.**

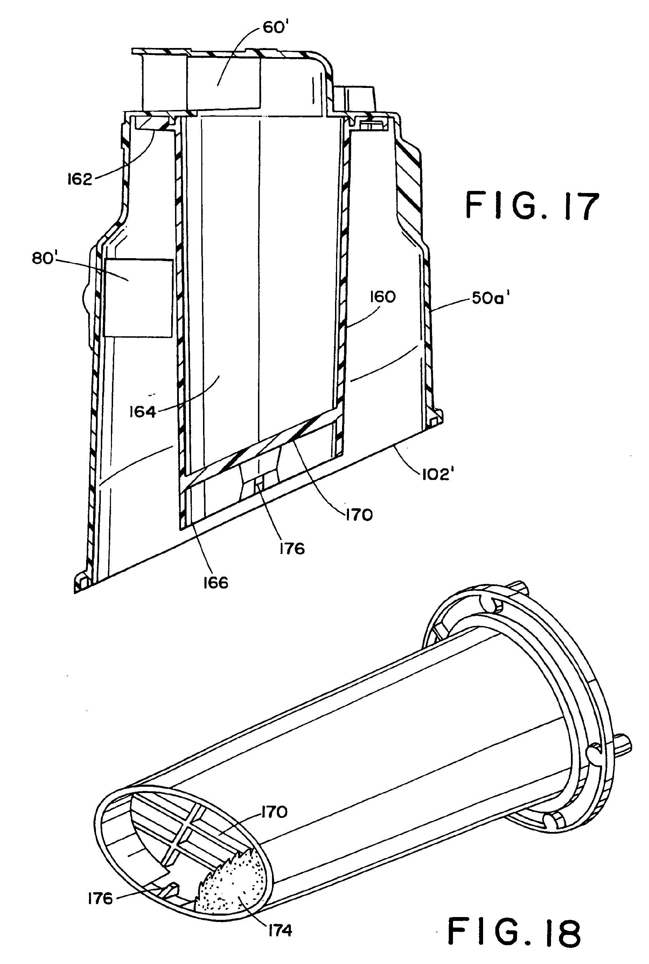

With reference now specifically to FIGURE 18, an open or airstream permeable auxiliary filter support grid or framework **170** is provided, preferably in the region of the lower edge **166** of the conduit **160.** The open filter support **170** provides a backing member for a foam, paper, or similar conventional auxiliary filter element **174** that removes any residual dust and dirt from the suction airstream **J'** prior to its exit of the cyclonic airflow chamber **54'** through the outlet passages **164** and **60'.** In case there is a break in the seal between the filter **K** and the conduit **160,** the auxiliary filter **174** will prevent dirt or dust from being sucked into the motor of the vacuum cleaner. One or more tabs or teeth **176** project radially inwardly from the conduit **160** in the region of the framework **170** to engage the auxiliary filter element **174** so that the filter element is secured adjacent the framework **170** and will not be dislodged from its operative position by the force of gravity.

As is most readily apparent in FIGURE 15, the main filter element **K** and the upper conduit **160** together define a cylindrical column extending through the center of the cyclonic airflow chamber **54'** between the floor **152** and top wall **162.** This preferred cylindrical column shape also results from the filter element **K** and the upper conduit **160** having substantially the same outside diameter.

As the suction airstream **J'** enters the cyclonic chamber **54'** through the tangential inlet **80',** it travels downwardly in a cyclonic fashion so that dust and dirt entrained in the suction airstream are separated therefrom and collected in the dirt cup **52'** (as indicated at **L).** The suction airstream **J'** then passes through the main filter element **K** to remove residual contaminants therefrom, and moves upwardly through the main filter element **K,** through the auxiliary filter element **174,** and into the outlet passage **164.** The airstream **J'** is prevented from bypassing the main filter element **K** by the gasket **156** positioned between the filter element **K** and the conduit **160.** The airstream **J'** then exits the cyclonic airflow chamber **54'** through the outlet passage 60' and continues as described in relation to the vacuum cleaner **A.**

The position of the main filter element **K,** extending upwardly from the floor **152,** is highly desirable given that, as dust and dirt L are collected, at least a portion **M** of the suction airstream passes through the accumulated dust and dirt **L.** The accumulation of dust and dirt **L** seems to act as another filter element which filters more dust and dirt from the airstream **M.** Also, the flow of the suction airstream **M** downwardly through the accumulated dust and dirt **L** acts to compact the dust and dirt **L** downwardly toward the floor **152** so that the capacity of the dirt cup **52'** is efficiently utilized to extend the time before the dirt cup **52'** must be emptied.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims.

## Claims

1. An upright vacuum cleaner (A') comprising:
an upright housing section (B) including a handle (20);
a nozzle base section (C) hingedly interconnected with the upright housing section, said nozzle base section including a main suction opening (26) formed in an underside thereof;
a cyclonic airflow chamber (54') defined in said upright housing section for separating dust and dirt from a suction airstream;
a suction source (E) located in one of said upright housing section and said node base section and having a suction airflow inlet in fluid communication with said cyclonic chamber and a suction airflow outlet; and,
a main filter element (K) located in said cyclonic chamber upstream from said suction source for filtering residual dust and dirt from a suction airstream passing through said cyclonic airflow chamber, wherein a lower portion of said cyclonic airflow chamber is defined by a dirt container (52') for receiving and retaining dirt and dust separated from said suction airstream,
**characterized in that** said suction source (E) is located below said cyclonic airflow chamber (54'); and
wherein the main filter element extends upwardly within said cyclonic airflow chamber from a floor of said housing section.

2. The vacuum cleaner as set forth in claim 1 further comprising a final filter assembly (F) positioned on the vacuum cleaner, said final filter assembly being in fluid communication with an exhaust outlet of said suction source for filtering said suction airstream exhausted from said suction source exhaust outlet and for discharging said suction airstream into the atmosphere.

3. The vacuum cleaner as set forth in claim 2 wherein said final filter assembly comprises a high efficiency particulate arrest (HEPA) filter media.

4. The upright vacuum cleaner as set forth in any of claims 1-3 wherein said main filter element comprises porous high-density polyethylene filter media.

5. The upright vacuum cleaner as set forth in claim 4 wherein said porous filter media has pores with an average pore size of less than approximately 90 µm.

6. The vacuum cleaner of any of claims 1-5 further comprising an upper conduit (160) depending from a top wall (162) and including an outlet passage (164) therethrough in communication with the suction airstream outlet of said chamber.

7. The vacuum cleaner of claim 6 wherein said upper conduit includes a lower edge adapted for sealingly engaging the main filter element (K), whereby a suction airstream passing through said cyclonic airflow chamber from a suction airstream inlet to a suction airstream outlet passes through the main filter element and into said upper conduit.

8. The vacuum cleaner as set forth in claims 6 or 7 further comprising
an auxiliary filter element (174) positioned in said upper conduit, said auxiliary filter element being so positioned that airflow exiting said cyclonic airflow chamber through said upper conduit passes therethrough and is filtered of residual dust and dirt.

9. The vacuum cleaner of claim 8 further comprising an auxiliary filter support framework (170) extending across said outlet passage (164) defined in said upper conduit for supporting said auxiliary filter element in a blocking relationship relative to said outlet passage of said upper conduit

10. The vacuum cleaner of any of claims 1-9 further comprising a main filter support (50b, 150) extending upwardly in the housing for releasably securing said main filter element in said cyclonic airflow chamber.

11. The vacuum cleaner of any of claims 1-10 wherein the dirt container (52') comprises a dirt cup which is selectively positioned in said housing.

12. The vacuum cleaner of claim 11 wherein said main filter element (K) is positioned in said dirt cup.

13. The vacuum cleaner of claim 11 or 12 wherein said dirt cup is pivotable between a closed, operative position and an open position, said dirt cup including a floor.

14. The vacuum cleaner of claim 13 wherein an upper edge (100') of said dirt cup is defined by an inclined edge such that when said dirt cup is pivoted fully into the open position, the inclined upper edge is located in a substantially horizontal plane to inhibit spillage of the separated dirt and dust.

15. The vacuum cleaner of claim 13 or 14 further comprising a gasket (159) disposed between an upper edge of said filter element and a lower edge of said upper conduit so that said main filter element and a lower edge said upper conduit sealingly mate in an airtight manner when said dirt cup is in the closed, operative position.

16. The vacuum cleaner as set forth in any of claims 1-15 wherein a portion of said suction airstream in said cyclonic airflow chamber passes through accumulated dust and dirt (M) separated from said suction airstream so that said accumulated dust and dirt acts as a filter media to separate residual dust and dirt from said portion of said suction airstream prior to said portion of said suction airstream passing through said main filter element.

17. The vacuum cleaner of any of claims 1-16 further comprising a rotating brush assembly (36) positioned in the region of the nozzle main suction opening (26).

18. The vacuum cleaner of any of claims 1-17 further comprising a first conduit (34, 86, 82) connecting said main suction opening (26) to said cyclonic airflow chamber (54').

19. The vacuum cleaner of claim 18 further comprising a second conduit (46) connecting said cyclonic airflow chamber with said suction source.

20. The vacuum cleaner of any of claims 1-19 wherein the main filter (K) is mounted to the dirt container so as to be removable from the upright housing section with the dirt container.

## Patentansprüche

1. Aufrecht stehender Staubsauger (A'), der umfasst:
einen aufrechten Gehäuseabschnitt (B), der einen Griff (20) aufweist;
einen Düsenbasisabschnitt (C), der mit dem aufrechten Gehäuseabschnitt gelenkig verbunden ist, wobei der Düsenbasisabschnitt eine in seiner Unterseite gebildete Hauptsaugöffnung (26) aufweist;
eine Zyklon-Luftströmungskammer (54'), die in dem aufrechten Gehäuseabschnitt definiert ist, um Staub und Schmutz von einem Saugluftstrom zu trennen;
eine Saugquelle (E), die sich entweder in dem aufrechten Gehäuseabschnitt oder in dem Düsenbasisabschnitt befindet und einen Saugluftströmungseinlass, der mit der Zyklonkammer in einer Fluidkommunikation steht, und einen Saugluftströmungsauslass besitzt; und
ein Hauptfilterelement (K), das sich in der Zyklonkammer stromaufseitig der Saugquelle befindet, um restlichen Staub und Schmutz aus einem Saugluftstrom, der sich durch die Zyklon-Luftströmungskammer bewegt, zu filtern, wobei ein unterer Abschnitt der Zyklon-Luftströmungskammer durch einen Schmutzbehälter (52') definiert ist, um Schmutz und Staub, die von dem Saugluftstrom getrennt worden sind, aufzunehmen und zu halten,
**dadurch gekennzeichnet, dass** sich die Saugquelle (E) unter der Zyklon-Luftströmungskammer (54') befindet; und
das Hauptfilterelement sich von einem Boden des Gehäuseabschnitts in der Zyklon-Luftströmungskammer nach oben erstreckt.

2. Staubsauger nach Anspruch 1, der ferner eine Endfilteranordnung (F) umfasst, die an dem Staubsauger angeordnet ist, wobei die Endfilteranordnung mit einem Ausstoßauslass der Saugquelle in einer Fluidkommunikation steht, um den von dem Saugquellen-Ausstoßauslass ausgestoßenen Saugluftstrom zu filtern und um den Saugluftstrom in die Atmosphäre abzugeben.

3. Staubsauger nach Anspruch 2, wobei die Endfilteranordnung ein Partikelrückhalte-Filtermedium mit hohem Wirkungsgrad (HEPA-Filtermedium) enthält.

4. Aufrecht stehender Staubsauger nach einem der Ansprüche 1-3, wobei das Hauptfilterelement ein poröses, hochdichtes Polyethylen-Filtermedium enthält.

5. Aufrecht stehender Staubsauger nach Anspruch 4, wobei das poröse Filtermedium Poren mit einer durchschnittlichen Porengröße von weniger als etwa 90 µm besitzt.

6. Staubsauger nach einem der Ansprüche 1-5, der ferner eine obere Leitung (160) umfasst, die von einer oberen Wand (162) nach unten führt und einen Auslasskanal (164) durch diese hindurch aufweist, der mit dem Saugluftstromauslass der Kammer kommuniziert.

7. Staubsauger nach Anspruch 6, wobei die obere Leitung eine Unterkante aufweist, die dazu ausgelegt ist, mit dem Hauptfilterelement (K) in einen dichten Eingriff zu gelangen, wodurch sich ein Saugluftstrom, der sich durch die Zyklon-Luftströmungskammer von einem Saugluftstromeinlass zu einem Saugluftstromauslass bewegt, durch das Hauptfilterelement und in die obere Leitung bewegt.

8. Staubsauger nach den Ansprüchen 6 oder 7, der ferner umfasst:
ein Hilfsfilterelement (174), das in der oberen Leitung positioniert ist, wobei das Hilfsfilterelement so positioniert ist, dass sich die Luftströmung, die die Zyklon-Luftströmungskammer durch die obere Leitung verlässt, hindurch bewegt und von restlichem Staub und Schmutz gefiltert wird.

9. Staubsauger nach Anspruch 8, der ferner einen Hilfsfilter-Tragrahmen (170) aufweist, der sich durch den Auslasskanal (164) erstreckt, der in der oberen Leitung definiert ist, um das Hilfsfilterelement in einer blockierenden Beziehung in Bezug auf den Auslasskanal der oberen Leitung zu unterstützen.

10. Staubsauger nach einem der Ansprüche 1-9, der ferner einen Hauptfilterträger (50b, 150) umfasst, der sich im Gehäuse nach oben erstreckt, um das Hauptfilterelement in der Zyklon-Luftströmungskammer lösbar zu befestigen.

11. Staubsauger nach einem der Ansprüche 1-10, wobei der Schmutzbehälter (52') eine Schmutzmanschette aufweist, die in dem Gehäuse wahlweise positioniert wird.

12. Staubsauger nach Anspruch 11, wobei das Hauptfilterelement (K) in der Schmutzmanschette positioniert ist.

13. Staubsauger nach Anspruch 11 oder 12, wobei die Schmutzmanschette zwischen einer geschlossenen Arbeitsposition und einer geöffneten Position schwenkbar ist, wobei die Schmutzmanschette einen Boden aufweist.

14. Staubsauger nach Anspruch 13, wobei eine Oberkante (100') der Schmutzmanschette durch einen geneigte Kante definiert ist, derart, dass dann, wenn die Schmutzmanschette vollständig in die geöffnete Position geschwenkt ist, die geneigte Oberkante sich in einer im Wesentlichen horizontalen Ebene befindet, um ein Verschütten des getrennten Schmutzes und Staubs zu verhindern.

15. Staubsauger nach Anspruch 13 oder 14, der ferner eine Dichtung (159) aufweist, die zwischen einer Oberkante des Filterelements und einer Unterkante der oberen Leitung angeordnet ist, so dass das Hauptfilterelement und eine Unterkante der oberen Leitung luftdicht aneinander geschmiegt sind, wenn sich die Schmutzmanschette in der geschlossenen Arbeitsposition befindet.

16. Staubsauger nach einem der Ansprüche 1-15, wobei sich ein Anteil des Saugluftstroms in der Zyklon-Luftströmungskammer durch angesammelten Staub und Schmutz (M), der von dem Saugluftstrom getrennt worden ist, bewegt, so dass der angesammelte Staub und Schmutz als ein Filtermedium wirkt, um restlichen Staub und Schmutz aus dem Anteil des Saugluftstroms zu trennen, bevor sich dieser Anteil des Saugluftstroms durch das Hauptfilterelement bewegt.

17. Staubsauger nach einem der Ansprüche 1-16, der ferner eine Drehbürstenanordnung (36) umfasst, die in dem Bereich der Düsenhauptsaugöffnung (26) positioniert ist.

18. Staubsauger nach einem der Ansprüche 1-17, der ferner eine erste Leitung (34, 86, 82) umfasst, die die Hauptsaugöffnung (26) mit der Zyklon-Luftströmungskammer (54') verbindet.

19. Staubsauger nach Anspruch 18, der ferner eine zweite Leitung (46) umfasst, die die Zyklon-Luftströmungskammer mit der Saugquelle verbindet.

20. Staubsauger nach einem der Ansprüche 1-19, wobei der Hauptfilter (K) an dem Schmutzbehälter montiert ist, derart, dass er von dem aufrechten Gehäuseabschnitt zusammen mit dem Schmutzbehälter abnehmbar ist.

## Revendications

1. Aspirateur vertical (A') comprenant :
une section de boîtier verticale (B) comprenant un manche (20) ;
une section de basé à buse (C) interconnectée de manière articulée avec la section de boîtier verticale, ladite section de base à buse comprenant une ouverture d'aspiration principale (26) formée sur son côté inférieur ;
une chambre d'écoulement d'air à cyclone (54') définie dans ladite section de boîtier verticale pour séparer la poussière et la saleté d'un courant d'air d'aspiration ;
une source d'aspiration (E) située dans une de ladite section de boîtier verticale et de ladite section de base à buse et ayant une entrée d'écoulement d'air d'aspiration en communication de fluide avec ladite chambre à cyclone et une sortie d'écoulement d'air d'aspiration ; et
un élément de filtre principal (K) situé dans ladite chambre à cyclone en amont de ladite source d'aspiration pour filtrer la poussière et la saleté résiduelles d'un courant d'air d'aspiration passant à travers ladite chambre d'écoulement d'air à cyclone, une partie inférieure de ladite chambre d'écoulement d'air à cyclone étant définie par un conteneur à saletés (52') destiné à recevoir et à retenir la saleté et la poussière séparées dudit courant d'air d'aspiration,
**caractérisé en ce que** ladite source d'aspiration (E) est située en dessous de ladite chambre d'écoulement d'air à cyclone (54') ; et dans lequel l'élément de filtre principal s'étend vers le haut à l'intérieur de ladite chambre d'écoulement d'air à cyclone depuis un fond de ladite section de boîtier.

2. Aspirateur selon la revendication 1, comprenant en outre un assemblage de filtre final (F) positionné sur l'aspirateur, ledit assemblage de filtre final étant en communication de fluide avec une sortie d'échappement de ladite source d'aspiration pour filtrer ledit courant d'air d'aspiration qui s'échappe de ladite source d'échappement de la source d'aspiration et pour décharger ledit courant d'air d'aspiration dans l'atmosphère.

3. Aspirateur selon la revendication 2, dans lequel ledit assemblage de filtre final comprend des agents filtrants arrêtant très efficacement les particules (HEPA).

4. Aspirateur vertical selon l'une quelconque des revendications 1 à 3, dans lequel ledit élément de filtre principal comprend des agents filtrants en polyéthylène poreux de haute densité.

5. Aspirateur vertical selon la revendication 4, dans lequel les agents filtrants poreux ont des pores d'une taille de pore moyenne inférieure à environ 90 µm.

6. Aspirateur selon l'une quelconque des revendications 1 à 5, comprenant en outre un conduit supérieur (160) pendant d'une paroi supérieure (162) et traversé par un passage de sortie (164) en communication avec la sortie du courant d'air d'aspiration de ladite chambre.

7. Aspirateur selon la revendication 6, dans lequel ledit conduit supérieur comprend un bord inférieur qui est à même de s'engager de manière étanche sur l'élément de filtre principal (K), de sorte qu'un courant d'air d'aspiration passant à travers ladite chambre d'écoulement d'air à cyclone d'une entrée de courant d'air d'aspiration à une sortie de courant d'air d'aspiration passe à travers l'élément de filtre principal et dans ledit conduit supérieur.

8. Aspirateur selon la revendication 6 ou 7, comprenant en outre
un élément de filtre auxiliaire (174) positionné dans ledit conduit supérieur, ledit élément de filtre auxiliaire étant positionné de sorte que l'écoulement d'air sortant de ladite chambre d'écoulement d'air à cyclone à travers ledit conduit supérieur passe à travers celui-ci et soit filtré de la poussière et de la saleté résiduelles.

9. Aspirateur selon la revendication 8, comprenant en outre un cadre de support de filtre auxiliaire (170) s'étendant à travers ledit passage de sortie (164) défini dans ledit conduit supérieur pour supporter ledit élément de filtre auxiliaire dans une relation bloquante par rapport audit passage de sortie dudit conduit supérieur.

10. Aspirateur selon l'une quelconque des revendications 1 à 9, comprenant en outre un support de filtre principal (50b, 150) s'étendant vers le haut dans le boîtier pour fixer de manière amovible ledit élément de filtre principal dans ladite chambre d'écoulement d'air à cyclone.

11. Aspirateur selon l'une quelconque des revendications 1 à 10, dans lequel le conteneur à saletés (52') comprend une coupe à saletés qui est positionnée sélectivement dans ledit boîtier.

12. Aspirateur selon la revendication 11, dans lequel ledit élément de filtre principal (K) est positionné dans ladite coupe à saletés.

13. Aspirateur selon la revendication 11 ou 12, dans lequel ladite coupe à saletés peut pivoter entre une position active fermée et une position ouverte, ladite coupe à saletés comprenant un fond.

14. Aspirateur selon la revendication 13, dans lequel un bord supérieur (100') de ladite coupe à saletés est défini par un bord incliné tel que, lorsque ladite coupe à saletés pivote complètement en position ouverte, le bord supérieur incliné soit situé dans un plan sensiblement horizontal pour empêcher le débordement de la saleté et de la poussière séparées.

15. Aspirateur selon la revendication 13 ou 14, comprenant en outre un joint d'étanchéité (159) disposé entre un bord supérieur dudit élément de filtre et un bord inférieur dudit conduit supérieur de sorte que ledit élément de filtre principal et un bord inférieur dudit conduit supérieur s'accouplent de manière étanche à l'air, lorsque ladite coupe à saletés est en position active fermée.

16. Aspirateur selon l'une quelconque des revendications 1 à 15, dans lequel la partie dudit courant d'air d'aspiration dans ladite chambre d'écoulement d'air à cyclone passe à travers la poussière et la saleté accumulées (M) séparées dudit courant d'air d'aspiration de sorte que ladite poussière et ladite saleté accumulées agissent comme des agents filtrants pour séparer la poussière et la saleté résiduelles de ladite partie dudit courant d'air d'aspiration avant que ladite partie dudit courant d'air d'aspiration ne passe à travers ledit élément de filtre principal.

17. Aspirateur selon l'une quelconque des revendications 1 à 16, comprenant en outre un assemblage de brosses rotatives (36) positionné dans la région de l'ouverture d'aspiration principale (26) de la buse.

18. Aspirateur selon l'une quelconque des revendications 1 à 17, comprenant en outre un premier conduit (34, 86, 82) raccordant ladite ouverture d'aspiration principale (26) à ladite chambre d'écoulement d'air à cyclone (54').

19. Aspirateur selon la revendication 18, comprenant en outre un second conduit (46) raccordant ladite chambre d'écoulement d'air à cyclone à ladite source d'aspiration.

20. Aspirateur selon l'une quelconque des revendications 1 à 19, dans lequel le filtre principal (K) est monté sur le conteneur à saletés de manière à pouvoir être retiré de la section de boîtier verticale avec le conteneur à saletés.
